# FASCICULE DE BREVET EUROPEEN

(11) **EP 1 466 788 B1**
(45) Date de publication et mention de la délivrance du brevet: **09.04.2008**
(21) Numéro de dépôt: 04360017.0
(22) Date de dépôt: 19.02.2004
(51) Int. Cl.: B60R 13/02, F16B 5/12

(54) **Dispositif de sécurité par blocage avec effet anti-recul, pour pièce rapportée sur la tôle de carrosserie d'un véhicule routier**
Sicherheitssperrvorrichtung mit Anti-Rückstosseffekt, für ein Anbauteil des Karosseriebleches eines Fahrzeuges
Safety locking device with anti-recoil effect, for a hang-on part on the sheet metal of a vehicle body

(30) Priorité: 09.04.2003 FR 0304400
(43) Date de publication de la demande: 13.10.2004
(73) Titulaire: REHAU S.A., 57340 Morhange (FR)
(72) Inventeur: Igle, Armand, 57340 Hombourg-Haut (FR)
(74) Mandataire: Metz, Paul

(56) Documents cités:
- FR-A- 2 742 711
- FR-A- 2 787 074
- GB-A- 2 160 579
- US-A- 5 114 203

## Description

La présente invention concerne un dispositif de sécurité par blocage avec effet anti-recul, destiné principalement aux baguettes, moulures, enjoliveurs de ceinture de caisse ou de bas de caisse pour véhicules routiers notamment du type automobile.

L'invention se rapporte également à un clip de fixation et à une baguette de protection ou d'enjolivement pour carrosserie de véhicules routiers notamment du type automobile comportant un tel dispositif de blocage de sécurité.

Les baguettes de protection ou d'enjolivement de ce type sont des pièces en matière plastique réalisées par moulage par injection, conçues pour être montées fixes sur la carrosserie d'un véhicule.

De manière connue, la carrosserie présente une série d'ouvertures réceptrices en forme de trou de serrure, c'est-à-dire comportant une zone large prolongée par une zone plus étroite, destinées à recevoir et à coopérer avec des éléments de fixation de la baguette situés en regard.

De façon classique, les baguettes comportent sur leur face intérieure un espace creux longitudinal, continu et ouvert en direction de la carrosserie du véhicule, dans lequel sont logés ces éléments de fixation appelés clips de fixation.

A leur extrémité libre, ces éléments de fixation sont conçus comme des têtes d'encliquetage destinées à se mettre en prise avec les ouvertures de la carrosserie qui leurs sont associées, ces têtes d'encliquetage étant reliées au reste du clip par un élément central plus étroit servant d'axe au clip de fixation.

Les ouvertures réceptrices peuvent être alignées ou non, disposées en quinconce ou autrement pour permettre l'accrochage des baguettes de section évolutive.

Au cours du montage, le monteur plaque la baguette contre la carrosserie en faisant passer chaque tête d'encliquetage des clips de fixation à travers la zone large de chaque ouverture en regard. Puis, il effectue un déplacement longitudinal de la baguette, de manière que l'axe de chacun des clips de fixation pénètre dans la zone étroite des ouvertures.

Simultanément, la face inférieure des têtes d'encliquetage vient en prise sous les bords de la carrosserie entourant la zone étroite des ouvertures, assurant ainsi une solidarisation par clipage de la baguette à la carrosserie.

La fixation de la baguette doit alors être complétée par un verrouillage longitudinal, car un simple clipage n'est pas suffisant pour la tenue de maintien exigée par les constructeurs. En effet, lors du roulage, la baguette se trouve soumise à d'importantes vibrations et secousses qui ont tendance à faire ressortir les clips de la zone étroite des ouvertures et de ce fait à désengager la baguette. Par ailleurs, les baguettes subissent des contraintes et des poussées de translation lors du passage des rouleaux de lavage dans les machines et tunnels de lavage des véhicules routiers. Ces poussées peuvent atteindre des valeurs de force arrivant à désengager les baguettes non ou mal verrouillées. Celles-ci ne tenant plus suffisamment finissent par tomber. Une fixation dite positive doit donc être prévue et réalisée afin de s'opposer à tout mouvement longitudinal de la baguette.

Un tel verrouillage longitudinal peut prendre différentes formes et plusieurs systèmes ont été envisagés dans l'art antérieur. FR2787074A décrit un dispositif de sécurité à effet antirecul, pour élément rapporte de type baguette, selon le préambule de revendication 1. On peut aussi notamment citer à titre d'exemple le verrouillage obtenu par vissage décrit dans le brevet REHAU FR 2.742.711.

Un autre type d'éléments de verrouillage longitudinal, plus satisfaisant, a alors été développé dans l'art antérieur. Il s'agit d'un dispositif de verrouillage longitudinal parfois appelé « marteau de verrouillage » qui est intégré à la baguette, c'est-à-dire réalisé d'une seule pièce et d'un seul tenant avec la baguette au cours d'une unique étape de moulage.

Ce dispositif se présente sous la forme d'une bande flexible sensiblement parallèle et longitudinale par rapport à la baguette, qui s'étend en porte-à-faux à partir d'un socle rattaché à la face intérieure de la baguette. Son extrémité libre porte un doigt de verrouillage destiné à coopérer avec une ouverture adaptée, ménagée à cet effet dans la carrosserie.

Lors de la première étape du montage de la baguette, correspondant à l'insertion des têtes de clip dans la zone large des ouvertures de carrosserie, le doigt de verrouillage se trouve en appui contre la carrosserie, la bande longitudinale étant fléchie.

Par la suite, l'opérateur déplace la baguette pour faire passer l'axe des clips dans la zone étroite des ouvertures. A la fin de ce mouvement, le doigt de verrouillage du dispositif se trouve positionné en face de l'ouverture de carrosserie lui correspondant. La bande flexible se redresse alors et le doigt rentre dans l'ouverture de carrosserie, ce qui assure le verrouillage longitudinal de la baguette en s'opposant à tout mouvement longitudinal de démontage de celle-ci.

Malgré l'apparente simplicité de cette méthode de montage, des problèmes sont souvent rencontrés avec ce type de dispositifs intégrés de verrouillage, devant coopérer avec une ouverture de la carrosserie.

En effet, toutes les étapes du montage de la baguette s'effectuent en aveugle, la baguette opaque masquant la zone de montage. Or, une certaine précision est requise de la part du monteur, pour que le doigt pénètre réellement dans l'ouverture de carrosserie correspondante et que le verrouillage soit réalisé de façon efficace. La difficulté est encore accrue du fait des cadences de montage extrêmement élevées à respecter.

Une autre difficulté provient de la matière utilisée. Pour des raisons de coût on utilise majoritairement du polypropylène, matière qui une fois conformée en une pièce quelconque est connue pour ne pas revenir facilement et rapidement à sa forme initiale après déformation.

Il peut également exister un défaut au niveau de l'ouverture de carrosserie destinée à accueillir le doigt de verrouillage, s'opposant à ou gênant la pénétration du doigt. Ainsi par exemple, l'ouverture de carrosserie peut être totalement ou partiellement bouchée par de la peinture ou par une bavure liée à l'outillage d'estampage, ou même être inexistante dans certains cas extrêmes.

Toutes ces difficultés sont la cause de nombreux problèmes ou défauts de fixation de la baguette. Le plus souvent, le monteur n'a pas poussé suffisamment la baguette lors de la deuxième étape de montage. Le doigt du dispositif de verrouillage, n'ayant pas été amené jusqu'en face de l'ouverture de carrosserie, ne peut remplir sa fonction.

Par la suite, ces baguettes, non complètement ou correctement fixées, se décrochent lors du roulage ou lors du lavage par application de rouleaux et finissent par tomber.

Le but de l'invention est de résoudre les inconvénients précités. Pour cela, l'invention enseigne un dispositif supplémentaire de blocage de sécurité avec effet anti-recul, qui s'oppose au retrait de la baguette lorsque celle-ci n'a pas été complètement ou correctement verrouillée.

Pour résoudre ce problème technique, le dispositif de sécurité selon l'invention comprend un élément de blocage destiné à coopérer avec une ouverture déjà existante de la carrosserie, de préférence l'ouverture de clipage d'un clip de fixation.

Lors du montage de la baguette, cet élément de blocage se trouve dans un premier temps en position effacée, sous tension élastique contre la carrosserie. Puis dans un second temps, après translation longitudinale de la baguette, il se dresse par rappel élastique ou mémoire de forme et pénètre dans cette ouverture dans laquelle il s'immobilise en position opérante, en vue d'apporter une sécurité anti-recul par butée-arrêt contre le bord transversal aval de l'ouverture.

Cette mise en position opérante de l'élément de blocage du dispositif de sécurité selon l'invention s'effectue en avance longitudinale par rapport au verrouillage longitudinal de la baguette. Le dispositif de sécurité selon l'invention peut ainsi garantir le maintien de la baguette soumise à des sollicitations courantes et normales pour ce type d'objet, lorsque le verrouillage longitudinal n'est pas correct ou n'a pas été réalisé.

En application de ce principe de base, différentes variantes ont été imaginées et seront décrites par la suite.

Avantageusement, le dispositif de sécurité selon l'invention coopère avec une ouverture de la carrosserie déjà existante pour une autre fonction. Il ne nécessite donc pas la réalisation par le constructeur d'une ouverture supplémentaire.

Lors du montage de la baguette, le dispositif se met tout seul et de manière automatique en position opérante de blocage. Il ne nécessite aucune opération particulière de la part du monteur et ne ralentit en aucune façon la mise en place de la baguette.

Dans certain cas, le dispositif de sécurité selon l'invention réalise un blocage longitudinal suffisamment fort pour pouvoir remplacer le verrouillage longitudinal. Un dispositif de verrouillage longitudinal supplémentaire, de type « marteau » intégré par exemple, peut ne pas être nécessaire. Dans ce cas, on règlera le dispositif pour que le blocage se fasse en position finale de montage de la baguette.

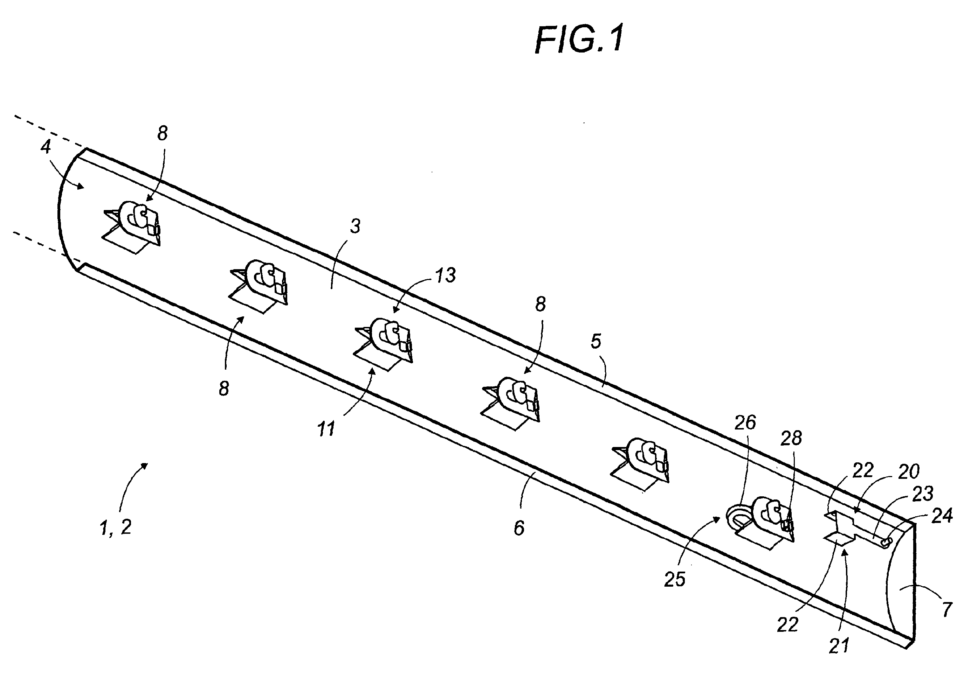

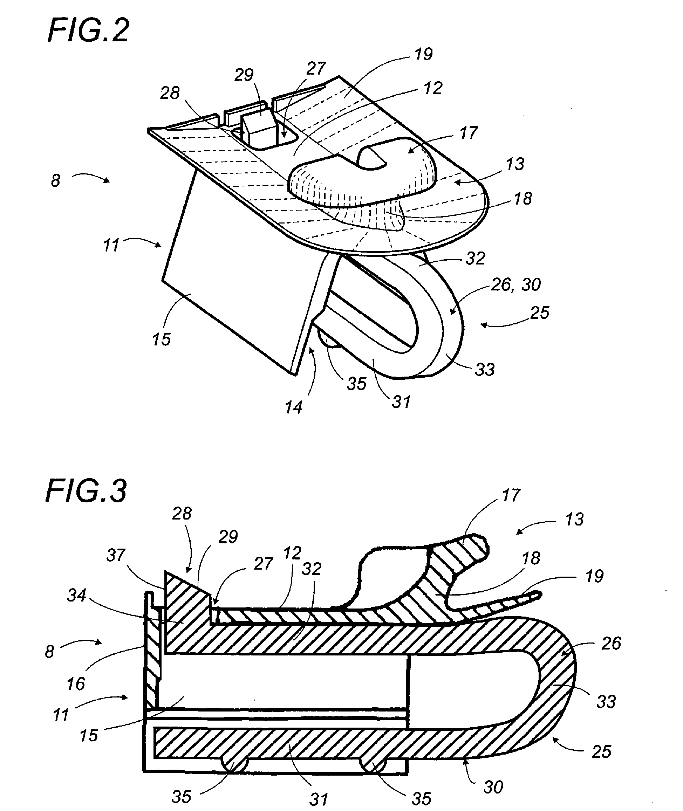

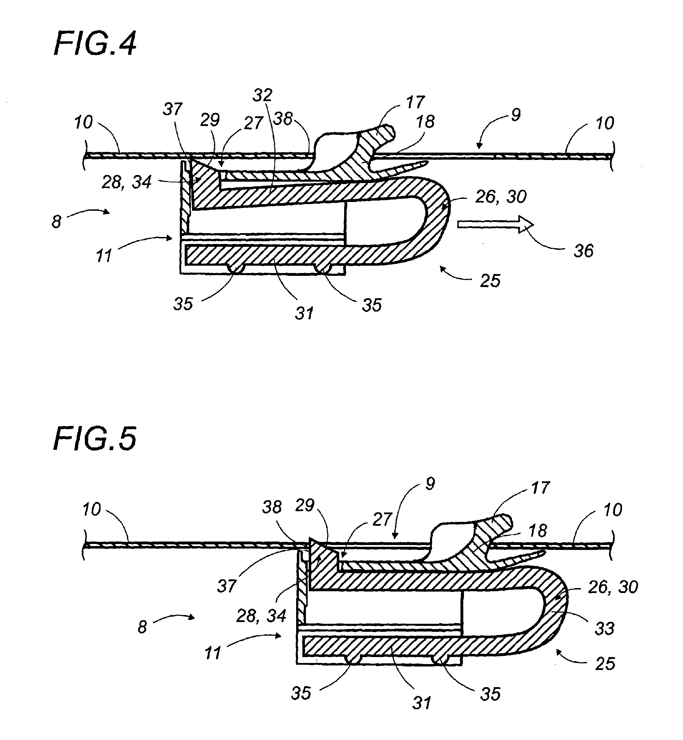

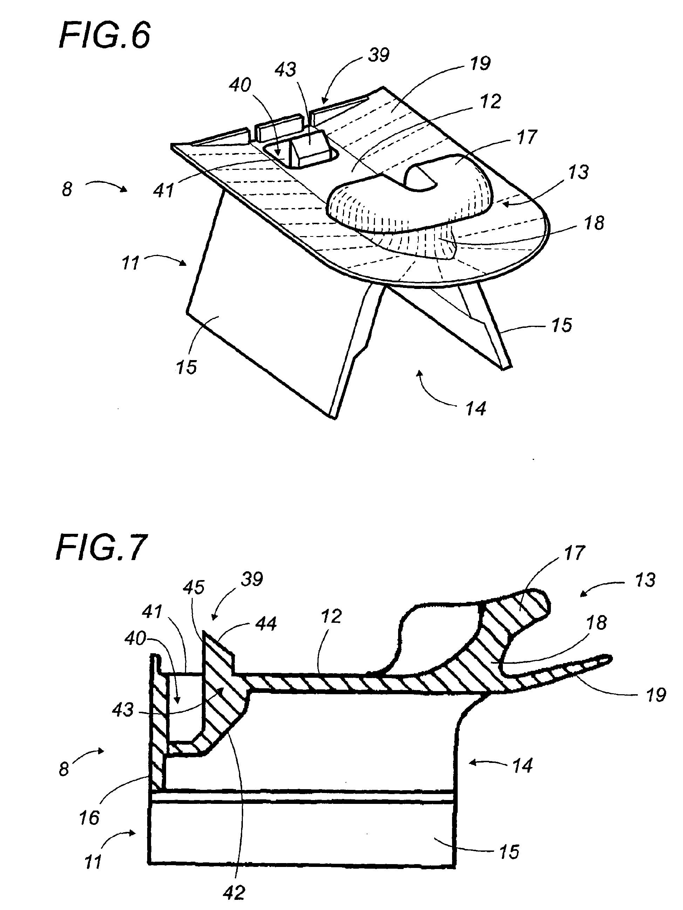

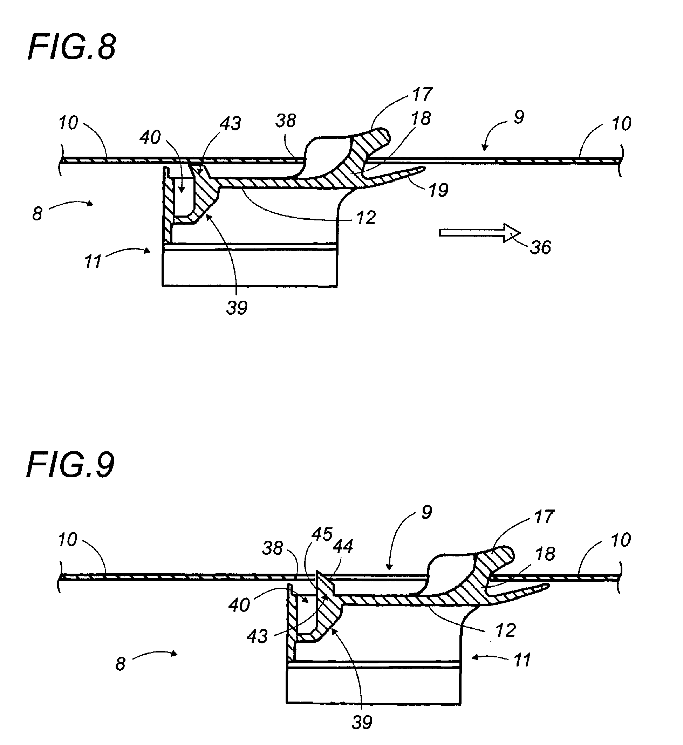

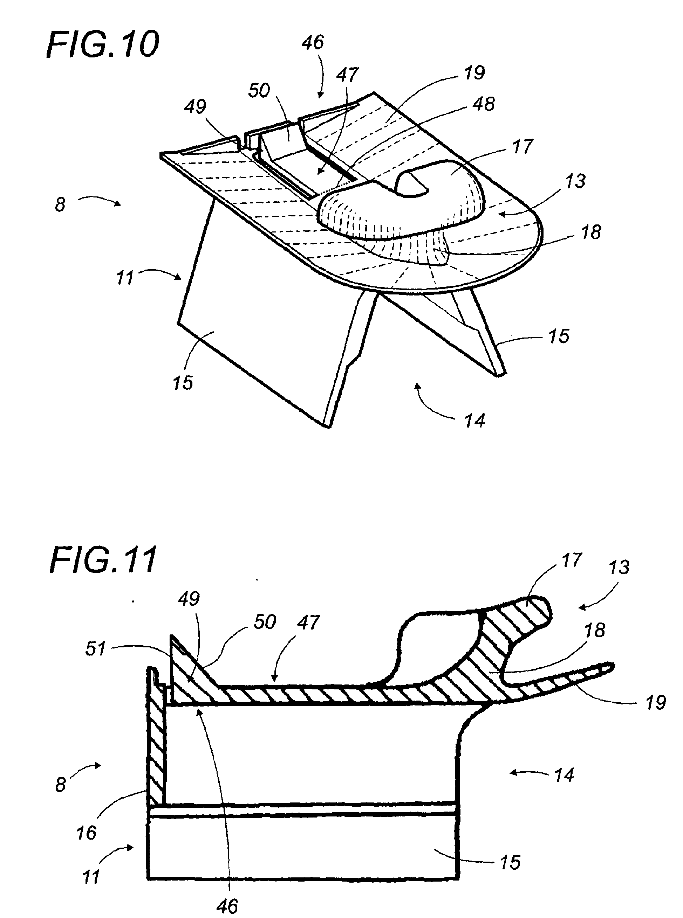

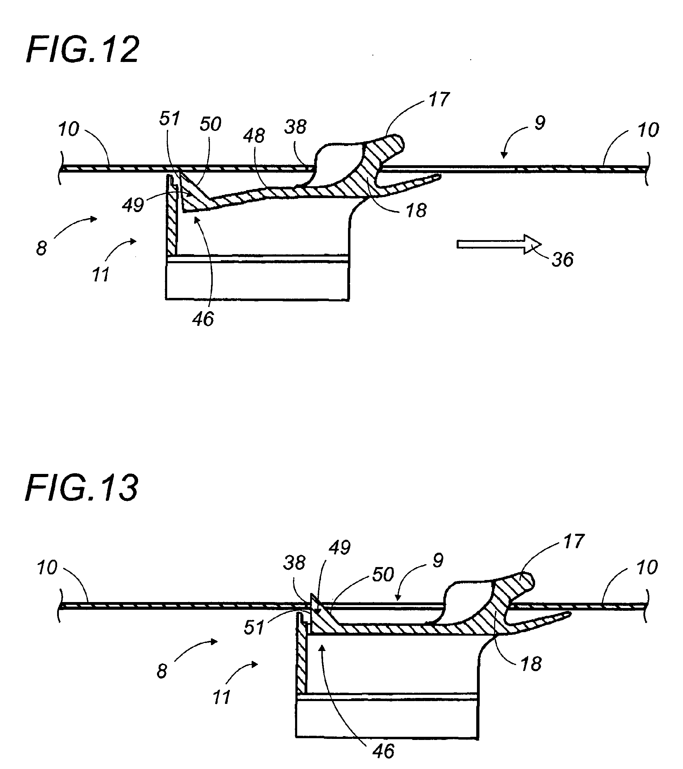

D'autres caractéristiques et avantages de l'invention apparaîtront à la lecture de la description détaillée qui va suivre, description faite en référence aux dessins annexés, dans lesquels :
. la figure 1 est une vue générale en perspective de la face intérieure d'une fraction de longueur de baguette comportant plusieurs clips intégrés et un dispositif de verrouillage longitudinal, l'un des clips intégrés comportant un dispositif de blocage de sécurité selon une première variante l'invention ;
. la figure 2 est une vue en perspective d'un clip intégré comportant un dispositif de blocage de sécurité selon la première variante de l'invention ;
. la figure 3 est une vue en coupe longitudinale d'un clip intégré comportant un dispositif de blocage de sécurité selon la première variante de l'invention ;
. les figures 4 et 5 sont des vues schématiques en coupe longitudinale formant une séquence illustrative du fonctionnement de la première variante représentée sur les figures 1 à 3 ;
. la figure 6 est une vue en perspective d'un clip intégré comportant un dispositif de blocage de sécurité selon une deuxième variante de l'invention ;
. la figure 7 est une vue en coupe longitudinale d'un clip intégré comportant un dispositif de blocage de sécurité selon la deuxième variante ;
. les figures 8 et 9 sont des vues schématiques en coupe longitudinale formant une séquence illustrative du fonctionnement de la deuxième variante représentée sur les figures 6 et 7 ;
. la figure 10 est une vue en perspective d'un clip intégré comportant un dispositif de blocage de sécurité selon une troisième variante de l'invention ;
. la figure 11 est une vue en coupe longitudinale d'un clip intégré comportant un dispositif de blocage de sécurité selon la troisième variante ;
. les figures 12 et 13 sont des vues schématiques en coupe longitudinale formant une séquence illustrative du fonctionnement de la troisième variante représentée sur les figures 10 et 11.

Le dispositif de blocage de sécurité selon la présente invention va maintenant être décrit de façon détaillée par trois de ses variantes données à titre d'exemple, en référence aux figures 1 à 13. Les éléments équivalents représentés sur les différentes figures porteront les mêmes références numériques.

On a représenté sur la figure générale 1, un tronçon 1 d'un élément rapporté 2 ou d'une pièce allongée à rapporter et à fixer sur la carrosserie d'un véhicule routier. Il s'agit par exemple d'un tronçon 1 de baguette 2, mais aussi de bande, moulure décorative ou protectrice, de ceinture de caisse, de bas de caisse ou tout autre élément ou accessoire à rapporter sur une carrosserie ou tout élément analogue.

Ce tronçon 1 de baguette 2 se présente sous la forme d'une pièce allongée, à corps de section transversale par exemple bombée convexe, constante ou évolutive de manière à délimiter par sa face intérieure 3 un espace concave 4 longitudinal et continu qui constitue le volume intérieur entre le corps de la baguette et la partie de la carrosserie du véhicule routier recouverte par celle-ci.

De manière classique, l'espace concave 4 est délimité latéralement par deux bords longitudinaux, 5 et 6 sensiblement horizontaux parallèles ou obliques selon les exigences de style. Il est également bordé à l'arrière par un bord transversal 7 d'extrémité, par exemple sensiblement vertical et perpendiculaire aux bords latéraux 5 et 6.

La baguette 2 comporte sur sa face intérieure 3 des clips de fixation 8 dits intégrés, c'est-à-dire réalisés d'une seule pièce et d'un seul tenant et dans la même matière avec la baguette au cours d'une unique étape de moulage.

Ces clips de fixation 8 permettent le montage et la fixation de la baguette 2 sur la carrosserie d'un véhicule. A cette fin, ils sont conçus pour coopérer avec une série d'ouvertures 9 en forme de « trou de serrure » prévues dans la tôle 10 de la carrosserie notamment au niveau des portes ou des bas de caisse.

Les clips de fixation 8 sont ici positionnés de manière équidistante le long de la ligne médiane de la baguette. Néanmoins, suivant les modèles de baguette et les possibilités d'ouvertures dans la carrosserie, ces clips peuvent être disposés différemment.

Les clips de fixation 8 représentés correspondent à une variante de forme parmi bien d'autres et ne constituent par conséquent qu'un exemple pour les besoins de la description. Comme on le verra ci-après, la présente invention est indépendante de la forme exacte de ces clips de fixation et de leur position pourvu qu'ils coopèrent avec une ouverture 9 dans la tôle 10 de la carrosserie, dans laquelle ils sont déplacés selon un mouvement de translation longitudinal au cours du montage de la baguette 2.

Les clips de fixation 8 représentés comporte une base 11 de la face supérieure 12 de laquelle fait saillie une structure d'accrochage ou de clipage 13 conçue pour s'engager dans l'ouverture de carrosserie 9 correspondante.

Cette base 11 est une structure en caisson ou en pont, qui délimite un espace creux 14 ouvert sur l'une de ses faces, de préférence à l'avant, pour permettre le démoulage.

La base 11 est reliée à la face intérieure de la baguette par deux parois latérales 15 qui sont de préférence inclinées et convergentes afin d'assurer une parfaite stabilité au dièdre ainsi formé. Pour améliorer sa rigidité, la base 11 peut également être fermée par une paroi arrière 16.

La base 11 constitue un pont de matière de hauteur suffisante pour maintenir la structure d'accrochage 12 à distance de la face intérieure 3 de la baguette d'une valeur rattrapant la flèche de concavité de la baguette 2 en vue de permettre l'accrochage sur la tôle de la carrosserie.

La structure d'accrochage 12 comporte une tête de clip 17 réunie à la base 11 par une âme centrale 18 qui sert ainsi d'axe au clip de fixation.

De façon préférentielle, le clip de fixation 8 peut comporter en outre une sellette d'étanchéité 19 destinée à obturer l'ouverture 9 de carrosserie lorsque la baguette est en place, afin de limiter l'entrée d'eau et de saletés à l'intérieur de la carrosserie et d'atténuer la transmission du bruit de roulage. La paroi supérieure 12 de la base 11 peut préférentiellement être conçue de manière à constituer directement la sellette d'étanchéité 19 du clip de fixation.

Selon des caractéristiques protégées par ailleurs, la tête de clip 17 peut présenter un corps de forme générale dite en « U couché », dont les chants périphériques sont arrondis. Bien évidemment, il ne s'agit que d'un exemple de réalisation n'ayant aucune incidence sur l'invention.

La baguette 2 comporte également un dispositif de verrouillage longitudinal 20, formé par moulage par injection en même temps que la baguette 2 et disposé par exemple à l'une des extrémités de la baguette. Ce dispositif de verrouillage longitudinal 20 est destiné à coopérer avec une ouverture spécifique ménagée en vis-à-vis dans la tôle 10 de la carrosserie du véhicule routier.

Sur la figure 1, le dispositif de verrouillage 20 est seul, placé à proximité du rebord transversal arrière 7 et décalé latéralement par rapport à l'axe d'alignement des clips de fixation 8. Cependant, ce dispositif de verrouillage 20 peut se trouver à un endroit quelconque de la baguette, aligné ou décalé par rapport aux clips de fixation 8, son positionnement dépendant entre autres des possibilités de réalisation de l'ouverture correspondante dans la tôle 10 de la carrosserie. De même, le dispositif de verrouillage longitudinal 20 n'est pas forcément unique.

Le dispositif de verrouillage 20 représenté comporte une base 21 en pont, reliée à la face intérieure 3 de la baguette par deux pièces de flanc 22. Une bande flexible 23, sensiblement horizontale, s'étend en porte-à-faux à l'arrière de la base 21 et comporte à son extrémité libre un doigt de verrouillage 24 dirigée vers le haut, destiné à coopérer avec l'ouverture correspondante de la carrosserie.

Là encore, le dispositif de verrouillage longitudinal 20 peut adopter une forme et une position quelconques, différentes de celles représentées, la présente invention étant indépendante de ce dispositif de verrouillage. Comme on le verra par la suite, dans certains cas, un tel dispositif de verrouillage longitudinal peut même être omis, le dispositif de blocage de sécurité selon l'invention assurant un verrouillage longitudinal suffisant.

Un premier mode de réalisation de l'invention a été représenté sur les figures 1 à 5 et va maintenant être décrit de manière détaillée.

Sur la figure 1, l'un des clips de fixation 8 est équipé d'un dispositif de blocage de sécurité 25 selon cette première variante. Il s'agit dans ce cas du clip de fixation 8 localisé à l'extrémité de la baguette. Il doit cependant être clair qu'il ne s'agit que d'un simple exemple de réalisation. En effet, le dispositif de blocage selon l'invention, et ce quelle que soit la variante considérée, peut équiper n'importe quel clip de fixation. De même, le dispositif de blocage de sécurité selon l'invention n'est pas forcément unique. Il peut équiper un nombre quelconque de clips répartis le long de la baguette, voire même l'ensemble des clips de fixation 8.

Selon cette variante, le dispositif de blocage sécurité 25 comprend un organe à propriété élastique 26, logé dans l'espace creux 14 existant à l'intérieur de la base 11 du clip de fixation 8.

La paroi supérieure 12 de la base 11 du clip de fixation, dans ce cas également sellette d'étanchéité 19, présente une ouverture traversante 27 à travers laquelle peut coulisser un élément de blocage 28. Avantageusement, l'extrémité de l'organe à propriété élastique 26 peut traverser l'ouverture (27) et former l'élément de blocage 28.

Grâce au caractère élastique de l'organe souple 26, l'élément de blocage 28 peut coulisser dans l'ouverture 27 entre une position effacée, représentée sur la figure 4, où il se trouve sous contrainte élastique et une position opérante, représentée sur les figures 3 et 5, où il dépasse au dessus de la paroi supérieure 12 de la base 11 du clip de fixation.

L'élément de blocage 28 adopte de préférence une forme générale en dent et présente une face supérieure 29 inclinée facilitant la mise en position effacée et le glissement du dispositif de blocage contre la carrosserie lors de la translation de la baguette.

L'organe souple 26 à propriété élastique est de préférence une bande 30 repliée de manière à adopter une configuration en épingle, avec une branche inférieure 31 et une branche supérieure 32 réunie par une portion coudée centrale 33.

La bande en épingle 30 est disposée dans l'espace creux 14, les extrémités libres des branches 31 et 32 étant dirigées vers la parois arrière 16 de la base 11 et la portion coudée centrale 33 dépassant préférentiellement hors de l'espace creux 14 de manière à constituer un moyen de préhension.

Pour faciliter sa mise en place, l'organe à propriété élastique 26 peut en outre être muni d'un ergot de préhension dépassant hors de l'espace creux 14, de préférence vers l'arrière de celui-ci.

La branche supérieure 32 se termine par une extrémité 34 dirigée vers le haut de manière à traverser l'ouverture 27 de la paroi supérieure 12 de la base et à former l'élément de blocage 28.

Pour améliorer l'ancrage de l'organe souple 26 dans le clip de fixation 8, la face inférieure de la branche inférieure 31 peut être pourvue d'une ou plusieurs structure(s) d'immobilisation, telles que par exemple des reliefs ou des plots d'immobilisation 35 au nombre de deux sur la variante représentée.

Dans cette variante préférentielle, le caractère élastique de l'organe souple 26 est donné d'une part par la forme en épingle de celui-ci et d'autre part par le choix de la matière le constituant. Il est ainsi préférable de choisir une matière dont les propriétés élastiques sont adaptées à la fonction envisagée pour cet élément, par exemple du polyacétal, du polyamide ou du polypropylène chargé ou modifié.

Si l'on utilise du polypropylène chargé ou modifié pour améliorer son élasticité, par exemple du polypropylène chargé fibres de verre ou modifié élastomère, on simplifie avantageusement le recyclage de l'ensemble baguette. En effet, la baguette étant généralement réalisée en polypropylène, l'organe souple pourra alors être recyclé sans problème avec la matière de la baguette.

Le principe du fonctionnement du dispositif de blocage de sécurité 25 apparaît clairement sur les figures schématiques 4 et 5.

Avant le montage, le dispositif de blocage de sécurité 25 ne subit aucune contrainte élastique et son élément de blocage 28 est en position dressée, comme illustré sur la figure 3.

Lors de la première étape de montage de la baguette illustrée sur la figure 4, la tête de clip 17 est insérée dans la partie large de l'ouverture 9 correspondante en forme de trou de serrure de la carrosserie. L'élément de blocage 28 se retrouve forcé en compression contre la tôle 10 de carrosserie au niveau de sa partie supérieure. De ce fait, il se place en position effacée en coulissant vers le bas dans l'ouverture traversante 27, l'extrémité libre de la branche supérieure 32 fléchissant de façon élastique en direction de la branche inférieure 31.

Au cours de la deuxième étape de montage, le monteur déplace la baguette par un mouvement de translation dans le sens de la flèche 36 représentée sur la figure 4. Le clip de fixation 8 est ainsi translaté vers la partie étroite de l'ouverture 9 en trou de serrure jusqu'à une position finale représentée sur la figure 5.

A ce moment, l'élément de blocage 28 ne se trouve plus contre la carrosserie 10, mais en regard de l'ouverture 9. Il se dresse alors par rappel élastique en position opérante dans cette ouverture.

En cas de mouvement involontaire de retrait du clip de fixation, le dispositif de blocage de sécurité 25 apporte une sécurité anti-recul par butée-arrêt de la paroi arrière 37 de l'élément de blocage 28 contre le bord transversal aval 38 de l'ouverture 9.

Avantageusement, cette mise en position opérante de sécurité s'effectue avant le verrouillage du dispositif de verrouillage longitudinal 20. L'effet anti-recul du dispositif de blocage de sécurité selon l'invention a donc lieu même si la baguette n'a pas été suffisamment poussée pour que le dispositif de verrouillage longitudinal puisse s'enclencher.

Un dispositif de blocage de sécurité 39 selon un deuxième mode de réalisation a été représenté sur les figures 6 à 9 et va maintenant être décrit.

Dans cette variante, le clip de fixation 8 comporte au niveau de la paroi supérieure 12 de la base 11 une cavité non traversante 40, située à l'arrière de la tête de clip 17. Cette cavité 40 présente une ouverture 41 préférentiellement dirigée vers le haut et par exemple de forme sensiblement carrée. Elle peut également comporter une paroi de fond inclinée 42.

Du fond de cette cavité 40 s'élève un élément de blocage 43 dont l'extrémité supérieure libre est saillante en dehors de la cavité 40, au-dessus de la paroi supérieure 12 de la base du clip de fixation 8.

Comme pour la première variante, l'élément de blocage 43 présente préférentiellement une forme générale en dent, avec une face supérieure 44 inclinée facilitant la mise en position effacée et le glissement du dispositif de blocage contre la carrosserie lors de la translation de la baguette.

L'élément de blocage 43 est de préférence réalisé d'une seule pièce avec la paroi de fond de la cavité 40 et préférentiellement d'une seule pièce avec la base 11 du clip de fixation 8. L'élément de blocage 43 peut ainsi être réalisé par moulage par injection simultanément au moulage du reste de la base 11 et dans la même matière que celle-ci.

Avantageusement, lors des opérations de moulage et de démoulage, la cavité 40 peut être occupée par l'extrémité d'une tige de maintien appelée « éjecteur », servant à maintenir la baguette 2 pendant le démoulage et notamment lors de l'extraction des cales moulantes hors des poches de moulage.

L'élément de blocage 43 peut alors être moulé de manière particulièrement simple et économique, en réalisant une rainure de forme adaptée à l'extrémité de la tige de maintien qui est présente à l'intérieur du moule lors des opérations de moulage. Ainsi, la tige de maintien permet de mouler simultanément la cavité 40 et l'élément de blocage 43.

Le principe du fonctionnement du dispositif de blocage de sécurité 39 selon cette variante a été illustré sur les figures schématiques 8 et 9.

Avant le montage, l'élément de blocage 43 est à l'état libre en position dressée, comme illustré sur la figure 7.

Lors de la première étape de montage de la baguette illustrée sur la figure 8, la partie supérieure saillante de l'élément de blocage 43 est comprimée et contrainte en flexion par la tôle 10 de carrosserie. L'élément de blocage 43 se trouve alors en position effacée.

Au cours de la deuxième étape de montage, le monteur déplace la baguette, et donc le clip de fixation 8, dans le sens de la flèche 36 jusqu'à une position finale représentée sur la figure 9.

L'élément de blocage 43 se trouvant en regard de l'ouverture 9, se redresse alors par rappel élastique ou mémoire de forme en position opérante dans cette ouverture.

Par la suite, si la baguette subit un effort de démontage, le dispositif de blocage de sécurité 39 assure un blocage anti-recul par butée-arrêt de la paroi arrière 45 de l'élément de blocage 43 contre le bord transversal aval 38 de l'ouverture 9.

Là encore, cette mise en position opérante de sécurité s'effectue avant le verrouillage d'un éventuel dispositif de verrouillage longitudinal 20.

Les figures 10 à 13 représentent un clip de fixation 8 muni d'une troisième variante 46 du dispositif de blocage de sécurité selon l'invention.

Dans ce mode de réalisation, la paroi supérieure 12 de la base 11 présente une languette flexible 47 située à l'arrière de la tête de clip 17. Avantageusement, cette languette flexible 47 peut être réalisée par une découpe ou une absence de liaison dans la paroi supérieure 12, le long des deux bords longitudinaux et du bord transversal arrière de la languette 47, celle-ci étant réunie à la paroi 12 par une ligne de flexion 48 située au niveau de son bord transversal avant.

La languette 47 comporte un élément de blocage 49 situé au niveau de son extrémité arrière libre. Cet élément de blocage 49 présente de préférence une forme générale en prisme ou en dent à face supérieure inclinée 50. Il est de préférence réalisé par moulage d'un seul tenant avec le reste de la languette flexible 47.

A l'état libre avant le montage, le dispositif de blocage 46 selon l'invention se trouve dans la configuration représentée sur la figure 11, sa languette 47 n'étant pas fléchie et son élément de blocage étant relevé.

Lors de la première étape de montage illustrée sur la figure 12, la partie supérieure saillante de l'élément de blocage 49 se trouve en appui contre la tôle 10 de carrosserie et est contrainte en abaissement par celle-ci jusqu'à une position effacée rendue possible par le pivotement de la languette flexible 47 autour de la ligne de flexion 48.

Après la deuxième étape de montage consistant à effectuer une translation selon la flèche 36, le dispositif se trouve dans la configuration représentée sur la figure 13. L'élément de blocage 49, positionné en regard de l'ouverture 9, se redresse par rappel élastique en position opérante dans cette ouverture.

Il assure alors un blocage anti-recul par butée-arrêt de sa paroi arrière 51 contre le bord transversal aval 38 de l'ouverture 9, s'opposant à tout effort de démontage.

Là encore, cette mise en position opérante de sécurité s'effectue avant le verrouillage d'un éventuel dispositif de verrouillage longitudinal 20.

Le dispositif de blocage selon l'invention, quelle que soit la variante considérée, est un dispositif de sécurité qui assure un blocage longitudinal visant à pallier un défaut ou une absence de verrouillage au niveau du dispositif principal de verrouillage longitudinal 20. Cependant, dans certains cas, on peut imaginer que le maintien assuré par le dispositif de blocage de sécurité selon l'invention soit suffisant pour remplir la fonction du dispositif de verrouillage longitudinal, ce dernier pouvant alors être supprimé. Un tel cas de figure est notamment envisageable dans le cas d'une baguette dont plusieurs, voire tous les clips de fixation sont équipés du dispositif selon l'invention, le maintien global pouvant alors être important même s'il est relativement faible au niveau unitaire.

L'invention se rapporte également à un clip de fixation 8 intégré, c'est-à-dire moulé d'une seule pièce avec l'élément rapporté 2 de type baguette, bande, moulure ou analogue qui est destiné à être fixé sur la tôle 10 de carrosserie d'un véhicule routier. Ce clip de fixation 8 est moulé sur la face intérieure 3 de l'élément rapporté 2, destiné à coopérer avec une ouverture de clipage correspondante 9 située en regard dans la carrosserie 10 du véhicule par rapport à laquelle l'élément rapporté 2 est déplacé selon un mouvement de translation longitudinale lors de son montage, et se caractérise en ce qu'il comporte un tel dispositif de blocage de sécurité, de préférence selon l'un des modes de réalisation précédemment décrit 25, 39 ou 46.

L'invention concerne aussi un élément 2 du type baguette, bande, moulure ou analogue, rapporté et fixé sur la tôle 10 de carrosserie d'un véhicule routier, comportant sur sa face intérieure 3 au moins un clip de fixation 8 destiné à coopérer avec une ouverture correspondante 9 située en regard dans la carrosserie 10 du véhicule, caractérisé en ce qu'il comporte au moins un tel dispositif de blocage de sécurité, de préférence selon l'un des modes de réalisation précédemment décrit 25, 39 ou 46.

Par ailleurs, il doit être bien compris que même si trois variantes préférentielles du dispositif selon l'invention ont été plus particulièrement décrites et représentées, elles ne constituent que des exemples de réalisation, la portée de l'invention étant définie par les revendications et regroupant tous les modes de réalisation qui en découlent.

## Revendications

1. Dispositif de blocage de sécurité à effet anti-recul, pour élément rapporté (2) de type baguette, bande, moulure ou analogue destiné à être fixé sur la tôle (10) de carrosserie d'un véhicule routier, cet élément rapporté (2) comportant sur sa face intérieure (3) au moins un clip de fixation (8) destiné à coopérer avec une ouverture de clipage correspondante (9) située en regard dans la carrosserie (10) du véhicule par rapport à laquelle l'élément rapporté (2) est déplacé selon un mouvement de translation longitudinale au cours du montage de cet élément rapporté (2), **caractérisée en ce qu**'il comprend un premier élément de blocage (28, 43, 49) destiné à coopérer avec l'ouverture de clipage (9) du clip de fixation (8) qui, lors du montage de l'élément rapporté (2), se trouve dans un premier temps en position effacée, sous tension élastique contre la carrosserie, puis dans un second temps, après translation longitudinale du clip de fixation, se dresse par rappel élastique ou mémoire de forme et pénètre dans cette ouverture (9) dans laquelle il s'immobilise en position opérante en vue d'apporter une sécurité anti-recul par butée-arrêt contre le bord transversal aval (38) de l'ouverture (9), cette mise en position opérante s'effectuant automatiquement et en avance longitudinale par rapport un deuxième dispositif de verrouillage longitudinal (20) de l'élément rapporté (2).

2. Dispositif de blocage de sécurité selon la revendication précédente **caractérisé en ce que** l'élément de blocage (28, 43, 49) présente une forme générale en dent à face supérieure (29, 44, 50) inclinée.

3. Dispositif de blocage de sécurité (25) selon la revendication 1 ou 2 **caractérisé en ce que** l'élément de blocage (28) fait partie d'un organe à propriété élastique (26), logé dans un espace creux (14) existant à l'intérieur de la base (11) du clip de fixation (8).

4. Dispositif de blocage de sécurité (25) selon la revendication précédente **caractérisé en ce que** l'élément de blocage (28) de l'organe à propriété élastique (26) coulisse à travers une ouverture traversante (27) de la paroi supérieure (12) de la base (11) du clip de fixation.

5. Dispositif de blocage de sécurité (25) selon la revendication précédente **caractérisé en ce qu**'une extrémité de l'organe à propriété élastique (26) traverse l'ouverture (27) et forme l'élément de blocage (28).

6. Dispositif de blocage de sécurité (25) selon l'une quelconque des revendications 3 à 5 **caractérisé en ce que** l'organe à propriété élastique (26) est une bande souple (30) repliée de manière à adopter une configuration en épingle, avec une branche inférieure (31) et une branche supérieure (32) réunie par une portion coudée centrale (33).

7. Dispositif de blocage de sécurité (25) selon la revendication précédente **caractérisé en ce que** la portion coudée centrale (33) dépasse hors de l'espace creux (14) de manière à constituer un moyen de préhension.

8. Dispositif de blocage de sécurité (25) selon la revendication 6 ou 7 **caractérisé en ce que** la face inférieure de la branche inférieure (31) est pourvue d'au moins une structure d'immobilisation (35).

9. Dispositif de blocage de sécurité (25) selon la revendication précédente **caractérisé en ce que** cette au moins une structure d'immobilisation est un plot d'immobilisation (35).

10. Dispositif de blocage de sécurité (25) selon l'une quelconque des revendications 3 à 9 **caractérisé en ce que** l'organe à propriété élastique (26) comporte un ergot de préhension dépassant hors de l'espace creux (14) facilitant sa mise en place.

11. Dispositif de blocage de sécurité (25) selon l'une quelconque des revendications 3 à 10 **caractérisé en ce que** l'organe à propriété élastique (26) est réalisé en polyacétal, en polyamide ou en polypropylène chargé ou modifié.

12. Dispositif de blocage de sécurité selon la revendication 1 ou 2 **caractérisé en ce que** l'élément de blocage (43) s'élève d'une cavité non traversante (40) ménagée dans la paroi supérieure (12) de la base (11) du clip de fixation (8) à l'arrière de la tête de clip (17), l'extrémité supérieure libre de l'élément de blocage (43) faisant saillie en dehors de la cavité (40) au-dessus de la paroi supérieure (12) de la base du clip de fixation (8).

13. Dispositif de blocage de sécurité selon la revendication précédente **caractérisé en ce que** l'élément de blocage (43) est réalisé d'une seule pièce avec la paroi de fond de la cavité (40).

14. Dispositif de blocage de sécurité selon la revendication 12 ou 13 **caractérisé en ce que** la cavité (40) présente une ouverture (41) dirigée vers le haut de forme sensiblement carrée et une paroi de fond inclinée (42).

15. Dispositif de blocage de sécurité selon la revendication 1 ou 2 **caractérisé en ce qu**'il comprend une languette flexible (47) dont l'extrémité arrière libre comporte l'élément de blocage (49).

16. Dispositif de blocage de sécurité selon la revendication précédente **caractérisé en ce que** la languette flexible (47) est réalisée par une découpe ou une absence de liaison dans la paroi supérieure (12) de la base (11) du clip de fixation (8).

17. Dispositif de blocage de sécurité selon la revendication 15 ou 16 **caractérisé en ce que** l'élément de blocage (49) est réalisé par moulage d'un seul tenant avec le reste de la languette flexible (47).

18. Clip de fixation intégré pour élément rapporté (2) de type baguette, bande, moulure ou analogue destiné à être fixé sur la tôle (10) de carrosserie d'un véhicule routier, ce clip de fixation (8) étant moulé sur la face intérieure (3) de l'élément rapporté (2) et étant destiné à coopérer avec une ouverture de clipage correspondante (9) située en regard dans la carrosserie (10) du véhicule par rapport à laquelle l'élément rapporté (2) est déplacé selon un mouvement de translation longitudinale au cours du montage de cet élément rapporté (2), **caractérisé en ce qu**'il comporte au moins un dispositif de blocage de sécurité (25, 39, 46) selon l'une quelconque des revendications précédentes.

19. Elément rapporté (2) de type baguette, bande, moulure ou analogue, destiné à être fixé sur la tôle (10) de carrosserie d'un véhicule routier, comportant sur sa face intérieure (3) au moins un clip de fixation (8) destiné à coopérer avec une ouverture correspondante (9) située en regard dans la carrosserie (10) du véhicule, **caractérisé en ce qu**'il comporte au moins un dispositif de blocage de sécurité (25, 39, 46) selon l'une quelconque des revendications 1 à 17.

## Claims

1. A security locking device with anti-recoil effect, for a mounted part (2) as a rod, a slat, a moulding or similar intended to be fixed on the sheet metal (10) of a road vehicle body, said mounted part (2) including on its inner face (3) at least one fixing clip (8) intended to cooperate with a corresponding cliping opening (9) situated at the opposite in the body (10) of a vehicle in relation to which the mounted part (2) is moved according to a longitudinal translational movement during the assembly of said mounted part (2), **characterized in that** it includes a first locking element (28, 43, 49) intended to cooperate with the cliping opening (9) of the fixing clip (8) which, during the assembly of the mounted part (2), is in a first time in a hidden position, under elastic tension against the body, then in a second time, after longitudinal transfer of the fixing clip, rises up by elastic return or by shape memory and penetrates in said opening (9) in which it locks in operating position in order to give an anti-recoil security by bump stop against the downstream transverse edge (38) of the opening (9), said operating positioning being carried out automatically and in longitudinal advance to a second longitudinal locking device (20) of the mounted part (2).

2. A security locking device according to the previous claim **characterized in that** the locking element (28, 43, 49) has a general tooth shape with inclined upper face (29, 44, 50).

3. A security locking device (25) according to claim 1 or 2 **characterized in that** the locking element (28) is part of a device having elastic characteristic (26), housed in a hollow space (14) existing within the base (11) of the fixing clip (8).

4. A security locking device (25) according to the previous claim **characterized in that** the locking element (28) of the device having elastic characteristic (26) slides across a crossing opening (27) of the upper wall (12) of the base (11) of the fixing clip.

5. A security locking device (25) according to the previous claim **characterized in that** one end of the device having elastic characteristic (26) crosses the opening (27) and forms the locking element (28).

6. A security locking device (25) according to any one of claims 3 to 5 **characterized in that** the device having elastic characteristic (26) is a flexible strip (30) folded in order to adopt a hairpin-like structure, with a lower branch (31) and an upper branch (32) joined by a central bent portion (33).

7. A security locking device (25) according to the previous claim **characterized in that** the central bent portion (33) protrudes out of the hollow space (14) in order to form a gripping means.

8. A security locking device (25) according to claim 6 or 7 **characterized in that** the lower face of the lower branch (31) is provided with at least one locking structure (35).

9. A security locking device (25) according to the previous claim **characterized in that** said locking structure consists in a locking stud (35).

10. A security locking device (25) according to any of the claims 3 to 9 **characterized in that** the device having elastic characteristic (26) includes a gripping pin that protrudes out of the hollow space (14) allowing an easier positioning.

11. A security locking device (25) according to any of the claims 3 to 10 **characterized in that** the device having elastic characteristic (26) is made of polyacetal, polyamide or loaded or modified polypropylene.

12. A security locking device according to claim 1 or 2 **characterized in that** the locking element (43) rises up from a non-crossing cavity (40) realized in the upper wall (12) of the base (11) of the fixing clip (8) at the rear part of the clip head (17), the free upper end of the locking element (43) protruding out of the cavity (40) above the upper wall (12) of the base of the fixing clip (8).

13. A security locking device according to the previous claim **characterized in that** the locking element (43) is made of one single piece with the basis wall of the cavity (40).

14. A security locking device according to claim 12 or 13 **characterized in that** the cavity (40) has an opening (41) directed upward, having a noticeably squared form and an inclined basis wall (42).

15. A security locking device according to claim 1 or 2 **characterized in that** it includes a flexible tag (47) whose free rear end includes the locking element (49).

16. A security locking device according to the previous claim **characterized in that** the flexible tag (47) is accomplished by cutting or by missing connection in the upper wall (12) of the base (11) of the fixing clip (8).

17. A security locking device according to claim 15 or 16 **characterized in that** the locking element (49) is realized by moulding in a single piece with the rest of the flexible tag (47).

18. An integral fixing clip for mounted part (2) as a rod, a slat, a moulding or similar intended to be fixed on the sheet metal (10) of a road vehicle body, said fixing clip (8) being moulded on the inner face (3) of the mounted part (2) and being destined for cooperating with a corresponding cliping opening (9) situated at the opposite in the body (10) of the vehicle in relation to which the mounted part (2) is moved according to a longitudinal translational movement during the assembly of said mounted part (2), **characterized in that** it includes at least one security locking device (25, 39, 46) according to any of the previous claims.

19. A mounted part (2) as a rod, a slat, a moulding or similar destined for being fixed on the sheet metal (10) of a road vehicle body, including on its inner face (3) at least one fixing clip (8) to cooperate with a corresponding opening (9) situated at the opposite in the body (10) of the vehicle, **characterized in that** it includes at least one security locking device (25, 39, 46) according to any one of claims 1 to 17.

## Patentansprüche

1. Sicherheits-Blockierungsvorrichtung mit Rückschiebesperre für Anbauelement (2) vom Typ Stab, Band, Leiste oder Ähnliches, um auf dem Blech (10) der Karosserie eines Straßenfahrzeugs befestigt zu werden, wobei dieses Anbauelement (2) auf seiner Innenseite (3) mindestens einen Befestigungsclip (8) aufweist, um mit einer entsprechenden gegenüberliegenden Einklipsöffnung (9) in der Karosserie (10) des Fahrzeugs zusammenzuwirken, im Vergleich zu der das Anbauelement (2) gemäß einer Längsverschiebung im Laufe der Montage von diesem Anbauelement (2) verschoben wird,
**gekennzeichnet dadurch, dass** sie ein erstes Blockierungselement (28, 43, 49) umfasst, das mit der Einklipsöffnung (9) des Befestigungsclips (8) zusammenwirkt, der bei der Montage des Anbauelements (2) zunächst zurückgesetzt ist, unter elastischer Spannung gegen die Karosserie, dann, nach Längsverschiebung des Befestigungsclips, sich durch elastische Rückziehung oder Formgedächtnis aufrichtet und in diese Öffnung (9) eindringt, in der er sich in operativer Position immobilisiert, um eine Sicherheit mit Rückschiebesperre durch Anschlag gegen den Querrand hinter (38) der Öffnung (9) herbeizuführen, wobei diese operative Positionierung automatisch erfolgt und mit seitlichem Vorschub im Vergleich zu einer zweiten Längs-Verriegelungsvorrichtung (20) des Anbauelements (2).

2. Sicherheits-Blockierungsvorrichtung nach dem vorherigen Anspruch, **gekennzeichnet dadurch, dass** das Blockierelement (28: 43: 49) eine allgemeine Form als Zahn mit geneigter Oberseite (29: 44: 50) zeigt.

3. Sicherheits-Blockierungsvorrichtung (25) nach Anspruch 1 oder 2, **gekennzeichnet dadurch, dass** das Blockierelement (28) Teil eines elastischen Organs (26) ist, untergebracht in einem Hohlraum (14) in der Basis (11) des Befestigungsclips (8).

4. Sicherheits-Blockierungsvorrichtung (25) nach dem vorherigen Anspruch, **gekennzeichnet dadurch, dass** das Blockierelement (28) des elastischen Organes (26) durch eine Durchgangsöffnung (27) der oberen Wand (12) der Basis (11) des Befestigungsclips gleitet.

5. Sicherheits-Blockierungsvorrichtung (25) nach dem vorherigen Anspruch, **gekennzeichnet dadurch, dass** ein Ende des elastischen Organs (26) die Öffnung (27) durchquert und das Blockierelement (28) bildet.

6. Sicherheits-Blockierungsvorrichtung (25) nach einem beliebigen der Patentansprüche 3 bis 5, **gekennzeichnet dadurch, dass** das elastische Organ (26) ein biegsames Band (30) ist und so umgebogen, um Stecknadelform anzunehmen, mit einem unteren Zweig (31) und einem oberen Zweig (32), verbunden durch eine zentrale gekröpfte Portion (33).

7. Sicherheits-Blockierungsvorrichtung (25) nach dem vorherigen Anspruch, **gekennzeichnet dadurch, dass** die zentrale gekröpfte Portion (33) aus dem Hohlraum (14) ragt, um ein Griffmittel darzustellen.

8. Sicherheits-Blockierungsvorrichtung (25) nach Anspruch 6 oder 7, **gekennzeichnet dadurch, dass** die Unterseite des unteren Zweiges (31) mit mindestens einer Immobilisierungsstruktur (35) versehen ist.

9. Sicherheits-Blockierungsvorrichtung (25) nach dem vorherigen Anspruch, **gekennzeichnet dadurch, dass** diese mindestens eine Immobilisierungsstruktur ein Immobilisierungskontakt (35) ist.

10. Sicherheits-Blockierungsvorrichtung (25) nach einem beliebigen der Patentansprüche 3 bis 9, **gekennzeichnet dadurch, dass** das elastische Organ (26) einen Griffstift umfasst, der aus dem Hohlraum (14) ragt, was seine Einsetzung erleichtert.

11. Sicherheits-Blockierungsvorrichtung (25) nach einem beliebigen der Patentansprüche 3 bis 10 ,**gekennzeichnet dadurch, dass** das elastische Organ (26) aus Polyacetal, Polyamid oder verstärktem oder modifiziertem Polypropylen ist.

12. Sicherheits-Blockierungsvorrichtung nach Anspruch 1 oder 2, **gekennzeichnet dadurch, dass** das Blockierelement (43) sich aus einem nicht durchgehenden Hohlraum (40) in der oberen Wand (12) der Basis (11) des Befestigungsclips (8) hinter dem Clipkopf (17) erhebt, wobei das freie obere Ende des Blockierelements (43) aus dem Hohlraum (40) oberhalb der oberen Wand (12) der Basis des Befestigungsclips (8) ragt.

13. Sicherheits-Blockierungsvorrichtung nach dem vorherigen Anspruch **gekennzeichnet dadurch dass** das Blockierelement (43) einstückig mit der Bodenwand des Hohlraums (40) ist.

14. Sicherheits-Blockierungsvorrichtung nach Anspruch 12 oder 13 **gekennzeichnet dadurch, dass** der Hohlraum (40) eine Öffnung (41) aufweist, die nach oben hin nach oben deutlich viereckig ist, und eine geneigte Bodenwand (42).

15. Sicherheits-Blockierungsvorrichtung nach Anspruch 1 oder 2, **gekennzeichnet dadurch, dass** sie eine flexible Lasche (47) umfasst, deren freies hinteres Ende das Blockierelement (49) umfasst.

16. Sicherheits-Blockierungsvorrichtung nach dem vorherigen Anspruch, **gekennzeichnet dadurch, dass** die flexible Lasche (47) durch einen Ausschnitt verwirklicht wird oder eine fehlende Verbindung in der oberen Wand (12) der Basis (11) des Befestigungsclips (8).

17. Sicherheits-Blockierungsvorrichtung nach Anspruch 15 oder 16, **gekennzeichnet dadurch, dass** das Blockierelement (49) durch Formung eines einzigen Halters mit dem Rest der flexiblen Lasche (47) verwirklicht wird.

18. Integrierter Befestigungsclip für Anbauelement (2) vom Typ Stab, Band, Leiste oder Ähnliches, um auf dem Blech (10) der Karosserie von einem Straßenfahrzeug befestigt zu werden, wobei dieser Befestigungsclip (8) auf der Innenseite (3) von dem Anbauelement (2) gestaltet ist und mit einer entsprechenden gegenüberliegenden Einklipsöffnung (9) in der Karosserie (10) des Fahrzeugs zusammenwirkt, im Vergleich zu der das Anbauelement (2) gemäß einer Längsverschiebung im Laufe der Montage von diesem Anbauelement (2) verschoben wird, **gekennzeichnet dadurch, dass** sie mindestens eine Sicherheits-Blockierungsvorrichtung (25, 39, 46) nach einem beliebigem der vorherigen Ansprüche umfasst.

19. Anbauelement (2) vom Typ Stab, Band, Leiste oder Ähnliches, um auf dem Blech (10) der Karosserie eines Straßenfahrzeugs befestigt zu werden, mit auf der Innenseite (3) mindestens einem Befestigungsclip (8), um mit einer entsprechenden gegenüberliegenden Öffnung (9) in der Karosserie (10) des Fahrzeugs zusammenzuwirken, **gekennzeichnet dadurch, dass** sie mindestens eine Sicherheits-Blockierungsvorrichtung (25, 39, 46) nach einem beliebigem der Patentansprüche 1 bis 17 umfasst.
